# EUROPÄISCHE PATENTSCHRIFT

(11) **EP 3 574 033 B1**
(45) Veröffentlichungstag und Bekanntmachung des Hinweises auf die Patenterteilung: **30.12.2020**
(21) Anmeldenummer: 18701446.9
(22) Anmeldetag: 22.01.2018
(51) Int. Cl.: C08G 18/76, C08J 9/14, C08G 18/42, C08G 18/48, C08G 18/50, C08G 18/66, C08G 18/32, C08G 18/40

(54) **KÄLTEFLEXIBLE POLYURETHANFORMULIERUNG**
COLD FLEXIBLE POLYURETHANE FORMULATION
FORMULATION DE POLYURÉTHANE SOUPLE À BASSE TEMPÉRATURE

(30) Priorität: 25.01.2017 EP 17153114
(43) Veröffentlichungstag der Anmeldung: 04.12.2019
(73) Patentinhaber: BASF SE, 67056 Ludwigshafen am Rhein (DE)
(72) Erfinder: MOHMEYER, Nils, 3945 Ham (BE); GRAALMANN, Onno, 49448 Lemfoerde (DE); GRIESER-SCHMITZ, Christof, 49448Lemfoerde (DE); EISENHARDT, Andrea, 49448 Lemfoerde (DE); ESLAVA, Josep-Daniel, 08191 Rubi (ES)
(74) Vertreter: BASF IP Association
(86) Internationale Anmeldenummer: PCT/EP2018/051435
(87) Internationale Veröffentlichungsnummer: WO 2018/138048

(56) Entgegenhaltungen:
- EP-A1- 2 208 744
- WO-A1-90/05148
- WO-A1-94/05718
- WO-A1-2011/057999
- WO-A1-2011/131682
- WO-A1-2012/072540
- WO-A1-2012/110585
- WO-A1-2012/113737
- WO-A1-2013/178623
- WO-A1-2014/170316
- WO-A1-2015/150304
- WO-A2-2010/043624
- DE-A1- 10 044 712
- DE-A1- 10 156 129
- DE-A1- 19 654 149
- US-A- 5 405 218
- US-A1- 2012 214 891
- US-A1- 2013 324 632

## Beschreibung

Die vorliegende Erfindung betrifft Verfahren zur Herstellung einer kälteflexiblen Polyurethanisolierung bei dem man (a) Polyisocyanate mit (b) Verbindungen mit gegenüber Isocyanaten reaktiven Gruppen, (c) Treibmittel, (d) Katalysatoren, (e) Weichmacher und gegebenenfalls (f) weitere Additive, zu einer Reaktionsmischung vermischt und auf eine Oberfläche aufträgt und zur Isolierung aushärtet, wobei Isocyanate (a) und Verbindungen mit gegenüber Isocyanat reaktiven Gruppen (b), Treibmittel, (c), Katalysatoren (d), Weichmacher und gegebenenfalls weitere Additive (e) in solchen Mengen zur Umsetzung gebracht werden, dass der Isocyanatindex im Bereich von 100 - 200 liegt, die Verbindungen mit gegenüber Isocyanaten reaktiven Gruppen (b) mindestens ein Polyetherol (b1) mit einer nominalen Funktionalität von 4 oder größer, einem Anteil von Propylenoxid, bezogen auf das Gesamtgewicht von Alkylenoxid im Polyetherol (b1) von größer 60 Gew.-% und einer OH-Zahl von mindestens 300 mg KOH/g, mindestens ein Polyetherol (b2) mit einer nominalen Funktionalität von 3,5 oder kleiner, einem Anteil an prim. OH-Gruppen größer 50 %, und einer OH-Zahl von kleiner als 300 mg KOH/g, mindestens ein Polyesterol (b3) und Kettenverlängerer und oder Vernetzungsmittel (b4) enthalten, das Polyetherol (b2) mindestens ein Polyetherol (b2a) mit einer nominalen Funktionalität von 3,5 oder kleiner, einem Anteil an Ethylenoxyd, bezogen auf das Gesamtgewicht an Alkylenoxid im Polyol (b2a) von mindestens 80 Gew.-%, einem Anteil an primären OH-Gruppen größer 80 %, und einer OH-Zahl von größer als 100 mg KOH/g bis kleiner als 300 mg KOH/g und mindestens ein Polyetherol (b2b) mit einer nominalen Funktionalität von 3,5 oder kleiner, einem Anteil an primären OH-Gruppen größer 60 %, und einer OH-Zahl von größer als 20 mg KOH/g bis kleiner als 80 mg KOH/g aufweist und wobei der Wassergehalt, bezogen auf das Gesamtgewicht der Komponenten (b) bis (e), kleiner als 0,5 Gew.-% ist. Weiter betrifft die vorliegende Erfindung eine Polyurethanisolierung, erhältlich nach einem erfindungsgemäßen Verfahren.

Neben Erdöl stellt Erdgas eine der wichtigsten Energiequellen unserer Zeit dar. Immer häufiger wird Erdgas dabei als relativ saubere Energiequelle auch in mobilen Transportmitteln, wie Autos, Lastwagen, Flugzeugen oder insbesondere an Bord von Schiffen genutzt. Dabei wird versucht, insbesondere in dichter besiedelten Gebieten, wie Hafenstädten, aber auch Randmeeren, wie Nord- und Ostsee, auf die Verbrennung von Schweröl, das zurzeit als Hauptenergiequelle in der Schifahrt eingesetzt wird, zu verzichten und Erdgas als saubere Energiequelle zu verwenden. Problematisch ist dabei aber der hohe Raumbedarf von Erdgas unter Normalbedingungen. Um den Raumbedarf zu verringern wird Erdgas daher verflüssigt. Da Erdgas nur bei sehr niedrigen Temperaturen von ca. -160 °C verflüssigt werden kann und auch bei diesen Temperaturen gelagert und transportiert werden muss, ist es erforderlich, die Tanks so gut wie möglich zu isolieren, um den Verlust von Flüssiggas durch Verdampfen gering zu halten. Flüssigerdgastanks werden zurzeit beispielsweise mit Perlite oder Dämmplatten auf Basis von Polyurethanhartschaumstoffen thermisch gedämmt. So werden Dämmplatten auf Basis von Polyurethan und deren Einsatz zur Dämmung von Flüssigerdgastanks an Bord von Schiffen beispielsweise in EP 1698649, WO 2008083996 und WO 2008/083996 beschrieben. Diese Schriften beschreiben, wie die Isolationspaneele auf Maß geschnitten und zusammen mit Sperrholzplatten und harzgetränkten Glasfasermatten verklebt werden. Weiter wird beschrieben, dass diese Elemente dann direkt beim Bau der Tanker eingesetzt werden. Nachteilig an diesem Verfahren ist, dass es sich um ein aufwendiges Verfahren handelt. Weiter kann dies nicht bei der Nachrüstung der Flüssigerdgastanks angewandt werden, da nicht ausreichend Platz zur Verfügung steht.

Aufgabe der Erfindung war es daher, ein Polyurethanmaterial zu liefern, dass sich zur Isolation von Flüssigerdgastanks, insbesondere an Bord von Schiffen, eignet und einfach angebracht werden kann. Insbesondere war es Aufgabe der vorliegenden Erfindung ein Verfahren zur Isolation von Flüssigerdgastanks in räumlich sehr beengten Verhältnissen, wie beispielsweise bei der Nachrüstung solcher Tanks an Bord von Schiffen, zu liefern. Dabei soll das erhaltene Polyurethan besonders bevorzugte Eigenschaften bei niedrigen Temperaturen aufweisen und insbesondere einen hohen CTSR-Faktor (Cryogenic Thermal Stress Resistance) gemäß CINI (Committee Industrial Insulation) aufweisen.

Die erfindungsgemäße Aufgabe wurde gelöst durch ein Verfahren zur Herstellung einer kälteflexiblen Polyurethanisolierung bei dem man (a) Polyisocyanate mit (b) Verbindungen mit gegenüber Isocyanaten reaktiven Gruppen, (c) Treibmittel, (d) Katalysatoren, (e) Weichmacher und gegebenenfalls (f) weitere Additive, zu einer Reaktionsmischung vermischt und auf eine Oberfläche aufträgt und zur Isolierung aushärtet, wobei Isocyanate (a) und Verbindungen mit gegenüber Isocyanat reaktiven Gruppen (b), Treibmittel, (c), Katalysatoren (d), Weichmacher und gegebenenfalls weitere Additive (e) in solchen Mengen zur Umsetzung gebracht werden, dass der Isocyanatindex im Bereich von 100 - 200 liegt, die Verbindungen mit gegenüber Isocyanaten reaktiven Gruppen (b) mindestens ein Polyetherol (b1) mit einer nominalen Funktionalität von 4 oder größer, einem Anteil von Propylenoxid, bezogen auf das Gesamtgewicht von Alkylenoxid im Polyetherol (b1) von größer 60 Gew.-% und einer OH-Zahl von mindestens 300 mg KOH/g, mindestens ein Polyetherol (b2) mit einer nominalen Funktionalität von 3,5 oder kleiner, einem Anteil an prim. OH-Gruppen größer 50 %, und einer OH-Zahl von kleiner als 300 mg KOH/g, mindestens ein Polyesterol (b3) und Kettenverlängerer und oder Vernetzungsmittel (b4) enthalten das Polyetherol (b2) mindestens ein Polyetherol (b2a) mit einer nominalen Funktionalität von 3,5 oder kleiner, einem Anteil an Ethylenoxyd, bezogen auf das Gesamtgewicht an Alkylenoxid im Polyol (b2a) von mindestens 80 Gew.-%, einem Anteil an primären OH-Gruppen größer 80 %, und einer OH-Zahl von größer als 100 mg KOH/g bis kleiner als 300 mg KOH/g und mindestens ein Polyetherol (b2b) mit einer nominalen Funktionalität von 3,5 oder kleiner, einem Anteil an primären OH-Gruppen größer 60 %, und einer OH-Zahl von größer als 20 mg KOH/g bis kleiner als 80 mg KOH/g aufweist und wobei der Wassergehalt, bezogen auf das Gesamtgewicht der Komponenten (b) bis (e), kleiner als 0,5 Gew.-% ist.

Unter Polyisocyanat (a) wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente a) mindestens 2. Vorzugsweise beträgt die mittlere Isocyanatfunktionalität der Polyisocyanate a) mindestens 2,2 und besonders bevorzugt von 2,2 bis 4.

Als Polyisocyanate a) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente a) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate, häufig auch zusammen mit nicht umgesetzten Polyisocyanaten

Besonders bevorzugt enthalten die Polyisocyanate der Komponente a) 2,2'-MDI oder 2,4'-MDI oder 4,4'-MDI (auch als monomeres Diphenylmethan oder MMDI bezeichnet) oder oligomeres MDI, das aus höherkernigen Homologen des MDI, welche mindestens 3 aromatische Kerne und eine Funktionalität von mindestens 3 aufweisen, besteht, oder Mischungen aus zwei oder drei der vor-genannten Diphenylmethandiisocyanate, oder Roh-MDI, welches bei der Herstellung von MDI anfällt, oder bevorzugt Mischungen aus mindestens einem Oligomer des MDI und mindestens einem der vorgenannten niedermolekularen MDI-Derivate 2,2'-MDI, 2,4'-MDI oder 4,4'-MDI (auch als polymeres MDI bezeichnet).Üblicherweise werden die Isomeren und Homologen des MDI durch Destillation von Roh-MDI erhalten.

Vorzugsweise enthält polymeres MDI neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenpolyisocyanat bezeichnet.
Die (mittlere) Funktionalität eines Polyisocyanates, welches polymeres MDI enthält, kann im Bereich von ungefähr 2,2 bis ungefähr 4 variieren, insbesondere von 2,4 bis 3,8 und insbesondere von 2,6 bis 3,0. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® M20 oder Lupranat® M50 vertrieben.

Vorzugsweise enthält die Komponente (a) mindestens 70, besonders bevorzugt mindestens 90 und insbesondere 100 Gew.-%, bezogen auf das Gesamtgewicht der Komponente (a), ein oder mehrere Isocyanate, ausgewählt aus der Gruppe, bestehend aus 2,2'-MDI, 2,4'-MDI, 4,4'-MDI und Oligomeren des MDI. Dabei beträgt der Gehalt an oligomerem MDI vorzugsweise mindestens 20 Gew.-%, besonders bevorzugt größer 30 bis kleiner 80 Gew.-%, bezogen auf das Gesamtgewicht der Komponente (a).

Als Verbindungen mit gegenüber Isocyanaten reaktiven Gruppen (b) können alle Verbindungen eingesetzt werden, die zumindest zwei gegenüber Isocyanaten reaktive Gruppen, wie OH-, SH-, NH- und CH-acide Gruppen aufweisen. Gewöhnlich enthalten die Verbindungen mit gegenüber Isocyanaten reaktiven Gruppen (b) polymere Verbindungen mit gegenüber Isocyanaten reaktiven Gruppen mit 2 bis 8 mit Isocyanat reaktiven Wasserstoffatomen, wie Polyetherpolyole und Polyesterpolyole. Dabei beträgt das Molekulargewicht der Polyetherole und Polyesterole 300 g/mol oder mehr, Kettenverlängerer und Vernetzungsmittel haben Molekulargewichte kleiner 300 g/mol.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6 reaktive Wasserstoffatome gebunden enthält, in Gegenwart von Katalysatoren erhalten. Die nominale Funktionalität der Polyetherole beträgt daher 2 bis 8, vorzugsweise 2 bis 6 und bezieht sich auf die Funktionalität der Startermoleküle. Werden Mischungen aus Startermolekülen mit unterschiedlicher Funktionalität eingesetzt können gebrochenzahlige Funktionalitäten erhalten werden. Einflüsse auf die Funktionalität, beispielsweise durch Nebenreaktionen, werden bei der nominalen Funktionalität nicht berücksichtigt. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation LewisSäuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,3-Propylenoxid, 1,2- bzw. 2,3-Butylenoxid, jeweils alleine oder in Form von Mischungen, und vorzugsweise Ethylenoxid und/oder 1,2-Propylenoxid eingesetzt.

Als Startermoleküle kommen beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die Polyesteralkohole werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren oder den Anhydriden der genannten Säuren, hergestellt.

Als weitere Ausgangsstoffe bei der Herstellung der Polyester können auch hydrophobe Stoffe mitverwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol%, besonders bevorzugt 4 bis 15 Mol%.

Polyesterole haben dabei vorzugsweise eine Funktionalität von 1,5 bis 5, besonders bevorzugt 1,8 - 3,5 und insbesondere von 1,9 bis 2,2.

Erfindungsgemäß enthalten die Verbindungen mit gegenüber Isocyanaten reaktiven Gruppen (b) mindestens ein Polyetherol (b1) mit einer nominalen Funktionalität von 4 oder größer, einem Anteil von Propylenoxid, bezogen auf das Gesamtgewicht von Alkylenoxid im Polyetherol (b1) von größer als 60 Gew.-%, bevorzugt größer als 80 Gew.-% besonders bevorzugt mehr als 90 Gew.-% und insbesondere 100 Gew.-% und einem Anteil an sekundären OH-Gruppen von vorzugsweise größer als 50 %, besonders bevorzugt größer als 70 %, mehr bevorzugt von größer als 90 % und insbesondere von 100 % und einer OH-Zahl von mindestens 300 mg KOH/g, vorzugsweise mindestens 400 mg KOH/g, mindestens ein Polyetherol (b2) mit einer nominalen Funktionalität von 3,5 oder kleiner, vorzugsweise 2,0 bis 3,5 und besonders bevorzugt 2,8 bis 3,2, einem Anteil an primären OH-Gruppen größer 50 %, vorzugsweise größer 70 % und besonders bevorzugt größer 80% und einer OH-Zahl von kleiner als 300 mg KOH/g, mindestens ein Polyesterol (b3) und Kettenverlängerer und oder Vernetzungsmittel (b4) enthalten. Als Komponenten (b1) bis (b3) können dabei jeweils einzelne Verbindungen oder Mischungen eingesetzt werden, wobei jede der eingesetzten Verbindungen unter die Definition von (b1) bis (b3) fällt.

Dabei weist das Polyetherol (b1) einem Anteil von Propylenoxid, bezogen auf das Gesamtgewicht von Alkylenoxid im Polyetherol (b1), von bevorzugt größer als 80 Gew.-% besonders bevorzugt mehr als 90 Gew.-% und insbesondere 100 Gew.-% auf. Vorzugsweise ist der Anteil an sekundären OH-Gruppen größer als 50 %, besonders bevorzugt größer als 70 %, mehr bevorzugt von größer als 90 % und beträgt insbesondere 100 %. Die OH-Zahl des Polyetherols (b1) beträgt vorzugsweise 300 bis 1000, besonders bevorzugt 400 bis 800. In einer bevorzugten Ausführungsform wird als Starter bei der Herstellung des Polyetherols (b1) ein 4-funktionelles Amin eingesetzt, vorzugsweise Ethylendiamin.

Dabei enthält das Polyetherol (b2) mindestens ein Polyetherol (b2a) mit einer nominalen Funktionalität von 3,5 oder kleiner, einem Anteil an Ethylenoxyd, bezogen auf das Gesamtgewicht an Alkylenoxid im Polyol (b2a) von mindestens 80 Gew.-%, vorzugsweise mindestens 90 Gew.-% und insbesondere mindestens 100 Gew.-%, einem Anteil an primären OH-Gruppen größer 80 %, vorzugsweise größer als 90 Gew.-% und insbesondere von 100 % und einer OH-Zahl von größer als 100 mg KOH/g bis kleiner als 300 mg KOH/g und mindestens ein Polyetherol (b2b) mit einer nominalen Funktionalität von 3,5 oder kleiner, einem Anteil an Propylenoxid, bezogen auf das Gesamtgewicht an Alkylenoxid im Polyol (b2b) von vorzugsweise mindestens 50 Gew.-%, besonders bevorzugt 60 bis 90 Gew.-%, einem Anteil an primären OH-Gruppen größer 50 %, vorzugsweise 60 bis 90 % und einer OH-Zahl von größer als 20 mg KOH/g bis kleiner als 80, vorzugsweise größer als 25 mg KOH/g bis kleiner als 60 mg KOH/g und besonders bevorzugt größer als 30 mg KOH/g bis kleiner als 50 mg KOH/g.

Das Polyesterpolyol (b3) weist vorzugsweise eine Funktionalität von 2,0 bis 2,5 und eine Hydroxylzahl von 100 mg KOH/g bis 400 mg KOH/g, besonders bevorzugt 200 mg KOH/g bis 300 mg KOH/g auf. Vorzugsweise wird das Polyesterpolyol (b3) erhalten durch Kondensation von Disäure mit Diol, wobei die Disäurekomponente vorzugsweise eine aromatische Disäure enthält. Besonders bevorzugt wird neben der aromatischen Disäure zur Herstellung des Polyesterpolyols (b3) keine weitere Disäure eingesetzt. Besonders bevorzugt wird als Disäure Phthalsäure, Isophthalsäure und/oder Terephthalsäure verwendet. Die Diolkomponente enthält vorzugsweise Diethylenglycol.

Als Kettenverlängerungs- und/oder Vernetzungsmittel (b4) enthalten kommen insbesondere zwei- oder dreifunktionelle Amine und Alkohole, insbesondere Diole, Triole oder beide, jeweils mit Molekulargewichten kleiner als 250, vorzugsweise von 60 bis 250, und insbesondere 60 bis 200 g/mol zum Einsatz. Dabei spricht man bei zweifunktionellen Verbindungen von Kettenverlängerern und bei tri- oder höherfunktionellen Verbindungen von Vernetzungsmitteln. In Betracht kommen beispielsweise aliphatische, cycloaliphatische und/oder aromatische Diole mit 2 bis 14, vorzugsweise 2 bis 10 Kohlenstoffatomen, wie Ethylenglykol, 1,2-, 1,3-Propandiol, 1,2-, 1,3-Pentandiol, 1,10-Decandiol, 1,2-, 1,3-, 1,4-Dihydroxycyclohexan, Di-und Triethylenglykol, Di- und Tripropylenglykol, 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, Triethanolamin, niedermolekulare hydroxylgruppenhaltige Polyalkylenoxide auf Basis Ethylen- und/oder 1,2-Propylenoxid und den vorgenannten Diolen und/oder Triolen als Startermoleküle und Amine, wie 3,6-Dioxaoctamethylendiamin. Vorzugsweise werden Trifunktionelle Alkohole, wie Glycerin und Triethanolamin und Diamine, wie 3,6-Dioxaoctamethylendiamin, eingesetzt. Vorzugsweise enthalten der Kettenverlängerer und/oder das Vernetzungsmittel (b4) mindestens eine Verbindung, die Aminendgruppen aufweist.

Dabei beträgt der Anteil der Komponente (b1) vorzugsweise 15 bis 35 Gew.-%, der Komponente (b2) vorzugsweise 15 bis 35 Gew.-%, der Komponente (b3) vorzugsweise 20 bis 35 Gew.-% und der Komponente (b4) vorzugsweise 10 bis 35 Gew.-%, jeweils bezogen auf das Gesamtgewicht der Komponente (b).

In einer besonders bevorzugten Ausführungsform enthält die Komponente (b) neben den Komponenten (b1) bis (b4) weniger als 20 Gew.-%, besonders bevorzugt weniger als 10 Gew.-% und insbesondere keine weiteren Verbindungen mit gegenüber Isocyanaten reaktiven Gruppen. Werden als Isocyanate (a) Isocyanatprepolymere eingesetzt, wird der Gehalt an Verbindungen mit gegenüber Isocyanaten reaktiven Gruppen (b), inklusive den zur Herstellung der Isocyanatprepolymere eingesetzten Verbindungen mit gegenüber Isocyanaten reaktiven Gruppen (b) berechnet.

Ferner sind bei der Herstellung der erfindungsgemäßen kälteflexiblen Polyurethanisolierung Treibmittel (c) zugegen. Als Treibmittel (c) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane® 365 mfc oder HFC-245 fa, oder Gase, wie Kohlendioxid. In einer bevorzugten Ausführungsform wird als Treibmittel physikalischen Treibmittel, vorzugsweise nicht brennbares physikalisches Treibmittel eingesetzt. Insbesondere werden als Treibmittel Fluorkohlenwasserstoffe eingesetzt. Diese können geringe Mengen an chemischen Treibmittel, vorzugsweise Wasser enthalten. Dabei ist der Anteil an Wasser, bezogen auf das Gesamtgewicht der Komponenten (b) bis (e) kleiner als 0,5 Gew.-%, bevorzugt kleiner als 0,2 Gew.-% und insbesondere kleiner als 0,1 Gew.-%. Der Gehalt an physikalischen Treibmitteln liegt in einer bevorzugten Ausführungsform im Bereich zwischen 5 und 30 Gew.-%, insbesondere 10 und 25 Gew.-%, bezogen auf das Gesamtgewicht der Komponenten (b) bis (e).

Dabei wird das Treibmittel in einer Menge eingesetzt, dass die Dichte der erfindungsgemäßen kälteflexiblen Polyurethanisolierung vorzugsweise 30 bis 80 g/Liter und besonders bevorzugt 50 bis 70 g/Liter beträgt.

Als Katalysatoren (d) können alle Verbindungen eingesetzt werden, die die Isocyanat-Wasser-Reaktion oder die Isocyanat-Polyol-Reaktion beschleunigen. Solche Verbindungen sind bekannt und beispielsweise im "Kunststoffhandbuch, Band 7, Polyurethane", Carl Hanser Verlag, 3. Auflage 1993, Kapitel 3.4.1 beschrieben. Diese umfassen aminbasierte Katalysatoren und Katalysatoren auf Basis von organischen Metallverbindungen.

Als Katalysatoren auf Basis von organischen Metallverbindungen können beispielsweise organische Zinnverbindungen, wie Zinn-(II)-salze von organischen Carbonsäuren, wie Zinn-(II)-acetat, Zinn-(II)-octoat, Zinn-(II)-ethyl-hexoat und Zinn-(II)-laurat und die Dialkylzinn-(IV)-salze von organischen Carbonsäuren, wie Dibutyl-zinndiacetat, Dibutylzinndilaurat, Dibutylzinn-maleat und Dioctylzinn-diacetat, sowie Bismutcarboxylate wie Bismut(III)-neodecanoat, Bismut-2-ethylhexanoat und Bismut-octanoat oder Alkalisalze von Carbonsäuren, wie Kaliumacetat oder Kaliumformiat eingesetzt werden.

Als aminbasierte Katalysatoren werden üblicherweise tertiäre Amine enthaltende Verbindungen eingesetzt. Diese können auch gegenüber Isocyanat reaktive Gruppen, wie OH-, NH- oder NH₂-Gruppen, tragen. Einige der am häufigsten eingesetzten Katalysatoren sind Bis(2-Dimethyl-aminoethyl)ether, N,N,N,N,N-Pentamethyldiethylentriamin, N,N,N-Triethylamino-ethoxyethanol, Dimethylcyclohexylamin, Dimethylbenzylamin, Triethyl-amin, Triethylendiamin, Pentamethyldipropylentriamin, Dimethylethanolamin, N-Methylimidazol, N-Ethylimidazol, Tetramethylhexamethylendiamin, Tris-(Dimethylaminopropyl)hexahydrotriazin, Dimethylaminopropylamin, N-Ethylmorpholin, Diazabicycloundecen und Diazabicyclononen.

Vorzugsweise wird als Katalysator (d) eine Mischung, enthaltend zumindest ein tertiäres Amin und mindestens ein Katalysator auf Basis von organischen Metallverbindungen eingesetzt.

Als Weichmacher (e) seien beispielsweise Ester von mehrwertigen, vorzugsweise zweiwertigen Carbonsäuren mit einwertigen Alkoholen genannt. Die Säurekomponente solcher Ester kann sich z.B. herleiten von Bemsteinsäure, Isophpthalsäure, Terephthalsäure, Trimellitsäure, Zitronensäure, Phthalsäureanhydrid, Tetra- und/oder Hexahydrophthalsäureanhydrid, Endomethylen-tetrahydrophthalsäureanhydrid, Glutarsäureanhydrid, Maleinsäureanhydrid, Fumarsäure und/oder dimeren und/oder trimeren Fettsäuren wie Ölsäure, gegebenenfalls in Mischung mit monomeren Fettsäuren. Die Alkoholkomponente solcher Ester kann sich z.B. herleiten von verzweigten und/oder unverzweigten aliphatischen Alkoholen mit 1 bis 20 C-Atomen, wie Methanol, Ethanol, Propanol, Isopropanol, n-Butanol, sek.-Butanol, tert.-Butanol, den verschiedenen Isomeren des Pentylalkohols, Hexylalkohols, Octylalkohols (z.B. 2-Ethyl-Hexanol), Nonylalkohols, Decylalkohols, Laurylalkohols, Myristylalkohols, Cetylalkohols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe, Phenol, Kresol, Thymol, Carvacrol, Benzylalkohol und/oder Phenylethanol. Als Weichmacher können auch Ester von einwertigen Carbonsäuren mit zweiwertigen Alkoholen verwendet werden, wie Texanolesteralkohole, beispielsweise 2,2,4-Trimethyl-1,3-pentandiol diisobutyrat (TXIB) oder 2,2,4-Trimethyl-1,3-pentandiol dibenzoat; Diester aus Oligoalkylenglykolen und Alkylcarbonsäuren, beispielsweise Triethylenglykol-dihexanoat oder Tetraethylenglykol-diheptanoat und analoge Verbindungen.

Als Weichmacher (e) kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren bzw. Phosphorsäuren eingesetzt werden.

Bei den Weichmachern kann es sich auch um sogenannte polymere Weichmacher handeln, z.B. um Polyester der Adipin-, Sebacin- und/oder Phthalsäure.

Weiter sind auch Alkylsulfonsäureester des Phenols, z.B. Paraffinsulfonsäurephenylester, und aromatische Sulfonamide, z.B. Ethylltoluolsulfonamid, als Weichmacher verwendbar. Auch Polyether, beispielsweise Triethylenglykoldimethylether sind als Weichmacher verwendbar.

Weiter haben auch organische Phosphate, wie Tris-Chlorpropylphosphat (TCPP), Diethyl-ethanphosphonat (DEEP), Triethylphosphat (TEP), Dimethylpropylphosphonat (DMPP), Diphenylkresylphosphat (DPK) oder Triethylphosphat, welche üblicherweise als Flammschutzmittel eingesetzt werden, weichmachende Wirkung und können als Weichmacher (e) eingesetzt werden.

Vorzugsweise enthält der Weichmacher (d) organische Phosphate, besonders bevorzugt Tris-Chlorpropylphosphat und/oder Triethylphosphat, vorzugsweise Tris-Chlorpropylphosphat und Triethylphosphat. Dabei beträgt das Gewichtsverhältnis von Tris-Chlorpropylphosphat zu Triethylphosphat 1 : 10 bis 10 : 1, vorzugsweise 1 : 5 bis 2 : 1 und besonders bevorzugt 1 : 2 bis 1 : 1. In einer besonders bevorzugten Ausführungsform wird neben Tris-Chlorpropylphosphat und Triethylphosphat kein weiterer Weichmacher eingesetzt.

Vorzugsweise wird der Weichmacher in einer Menge von 0,1 bis 30, besonders bevorzugt von 5 bis 25 Gew.-% und insbesondere von 10 bis 20 Gew.-%, bezogen auf das Gesamtgewicht der Komponenten (b) bis (e), eingesetzt. Durch den Zusatz von Weichmacher können dabei die mechanischen Eigenschaften des harten Polyurethanschaumstoffs, insbesondere bei tiefen Temperaturen weiter verbessert werden.

Als weitere Additive (e) können Flammschutzmittel, Schaumstabilisatoren, weitere Füllstoffe und sonstige Zusatzstoffe, wie Antioxidantien eingesetzt werden.

Als Flammschutzmittel können im Allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. die ebenfalls als Weichmacher wirkenden Verbindungen Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten PolyurethanHartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden, welche ebenfalls weichmachende Wirkung haben und daher auch als Weichmacher eingesetzt werden können.

Die Flammschutzmittel werden im Rahmen der vorliegenden Erfindung bevorzugt in einer Menge von 0 bis 25% bezogen auf das Gesamtgewicht der Komponenten (b) bis (e) verwendet. Werden organische Phosphorverbindunen als Weichmacher eingesetzt, werden vorzugsweise keine weiteren Flammschutzmittel verwendet.

Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden, falls vorhanden, bevorzugt in einer Menge von 0,5 bis 4, besonders bevorzugt 1 bis 3 Gew.-%, bezogen auf das Gesamtgewicht der Komponenten (b) bis (e), verwendet.

Als weitere Füllstoffe, insbesondere verstärkend wirkende Füllstoffe, sind die an sich bekannten, üblichen organischen und anorganischen Füllstoffe, Verstärkungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Verwendet werden können auch Glasmikrohohlkugeln. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung, falls vorhanden, vorteilhafterweise in Mengen von 0,5 bis 30 Gew.-%, vorzugsweise 1 bis 15 Gew.-%, bezogen auf das Gewicht der Komponenten (a) bis (e), einverleibt.

Vorzugsweise wird die Reaktionsmischung durch Sprühen auf die zu isolierende Oberfläche aufgebracht. Dabei handelt es sich bei der zu isolierenden Oberfläche vorzugsweise um einen Tank, besonders bevorzugt um einen Tank für Flüssigerdgas. Dieser kann auch Metall oder Kunststoff bestehen. Dazu werden vorzugsweise die Komponenten (b) bis (d) und gegebenenfalls (e) zu einer Polyolkomponente vermischt. Diese werden anschließend vorzugsweise in einer Niederdruckmischvorrichtung, einer Hochdruckmischvorrichtung bei vermindertem Druck von kleiner 100 bar oder einer Hochdruckmaschine mit der Isocyanat-Komponente (a) vermischt und über eine Sprühdüse direkt auf die zu isolierende Oberfläche aufgetragen. Gegebenenfalls kann die Oberfläche vorher zur Verbesserung der Haftung in bekannter Weise vorbehandelt werden, beispielsweise durch den Auftrag bekannter Haftvermittler.

Isocyanate (a) und Verbindungen mit gegenüber Isocyanat reaktiven Gruppen (b), Treibmittel, (c), Katalysatoren (d), Weichmacher und gegebenenfalls weitere Additive (e) werden vorzugsweise in solchen Mengen zur Umsetzung gebracht, dass der Isocyanatindex im Bereich von 100 bis 200, bevorzugt 100 - 150 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Weiter betrifft die vorliegende Erfindung eine Polyurethanisolierung, erhältlich nach einem erfindungsgemäßen Verfahren. Die erfindungsgemäße Polyurethanisolierung wird vorzugsweise zur Isolierung von Flüssigerdgastanks an Bord von Schiffen, insbesondere von Flüssigerdgastanks an Bord von Schiffen, die verflüssigtes Erdgas zur Energieerzeugung an Bord enthalten, verwendet und umfasst thermisch isolierte Tanks, vorzugsweise Flüssigerdgastanks. Die erfindungsgemäße Polyurethanisolierung zeigt dabei eine hervorragende Kälteflexibilität, dabei beträgt der CTSR-Faktor (Cryogenic Thermal Stress Resistance) sowohl senkrecht zur Schäumrichtung als auch parallel zur Schäumrichtung vorzugsweise mindestens 1,2, besonders bevorzugt mindestens 1,5. Dabei wird der CTSR-Faktor im Rahmen der Erfindung wie folgt ermittelt: (Temperaturbereich = -163 bis 30 °C) $CTSR - Factor = \frac{{σ}_{ZT} ⋅ \left(1-υ\right)}{E ⋅ α ⋅ Δ T}$
σ_{ZT} = Zugfestigkeit in kPa bei -165 °C nach EN ISO 527
u = Poissonzahl; negativer Quotient aus einem Dehnungszuwachs Δεn in einer der beiden senkrecht zur Zugrichtung liegenden Achsen und dem entsprechenden Dehnungszuwachs Δεl in Zugrichtung, gemessen innerhalb des linearen Anfangsteils der Querdehnungs-/Längsdehnungskurve
E = Elastizitätsmodul in kPa bei -165 °C nach EN ISO 527
α = Längenänderungskoeffizient in mm/(mm•k) nach DIN 53752
ΔT = Temperaturdifferenz (193 K)

Weiter zeigt die erfindungsgemäße Polyurethanisolierung hervorragende thermische Leitfähigkeiten nach EN 14320-1-C.3 sowohl senkrecht als auch parallel zur Schäumrichtung von vorzugsweise kleiner als 0,0220 W/(m•k), besonders bevorzugt 0,0210 W/(m•k) und insbesondere 0,0200 W/(m•k), gemessen nach Herstellung des Schaumstoffs bei 10 °C (Mitteltemperatur). Nach Alterung ist die thermische Leitfähigkeit nach EN 14320-1-C.4 bzw. EN 14320-1-C5 sowohl senkrecht als auch parallel zur Schäumrichtung kleiner als 0,0280 W/(m•k), bevorzugt kleiner als 0,024 W/(m•k) und insbesondere kleiner als 0,0220 W/(m•k). Die Geschlossenzelligkeit nach EN ISO 4590 liegt vorzugsweise bei mindestens 90 %, besonders bevorzugt bei mindestens 94%. Darüber hinaus weist die erfindungsgemäße Polyurethanisolierung jeweils bei Raumtemperatur hervorragende Druckfestigkeiten nach EN ISO 826 von mindestens 0,3 N/mm², besonders bevorzugt mindestens 0,4 N/mm² und insbesondere mindestens 0,5 N/mm² und Zugfestigkeiten nach EN 527-2 bei Raumtemperatur von mindestens 0,3 N/mm², besonders bevorzugt mindestens 0,4 N/mm² und insbesondere mindestens 0,5 N/mm² auf. Bei -165 °C beträgt die Zugfestigkeit nach EN ISO 826 mindestens 0,5 N/mm², besonders bevorzugt mindestens 0,5 N/mm² und insbesondere mindestens 0,7 N/mm². Damit eignet sich die erfindungsgemäße Polyurethanisolierung hervorragend zur Isolation von Flüssigerdgastanks, beispielsweise an Bord von Fahrzeugen, insbesondere zur Isolation von Flüssigerdgastanks an Bord von Schiffen, die Flüssigerdgas zur Energiegewinnung an Bord enthalten.

Im Folgenden soll die Erfindung anhand von Beispielen verdeutlicht werden.

Der CTSR-Faktor und die Wärmeleitfähigkeit des Produktes werden in Parallelrichtung sowie in senkrechter Richtung des Schaumwachstums ermittelt. Dafür werden große, mehrlagige Schaumblöcken von mindestens 800 mm (Breite) mal 800 mm (Länge) mal 300 mm (Dicke) vorbereitet. Aus dem Schaumkern sind folgende Schaumprüfkörper zu schneiden:
- 12 Stücke von je 80 mm x 80 mm x 200 mm (200 mm Dicke in Parallelrichtung des Schaumwachstums) für die Bestimmung der Zugfestigkeit und des Elastizitätsmoduls unter Tieftemperatur in Parallelrichtung des Schaumwachstums.
- 12 Stücke von 80 mm x 80 mm x 200 mm (200 mm Dicke in senkrechter Richtung des Schaumwachstums) für die Bestimmung der Zugfestigkeit und des Elastizitätsmoduls unter Tieftemperatur in senkrechter Richtung des Schaumwachstums.
- 2 Stücke von 50 mm x 50 mm x 150 mm (150 mm Dicke in Parallelrichtung des Schaumwachstums) für die Bestimmung der Längenänderung in Parallelrichtung des Schaumwachstums.
- 2 Stücke von 50 mm x 50 mm x 150 mm (150 mm Dicke in senkrechter Richtung des Schaumwachstums) für die Bestimmung der Längenänderung in senkrechter Richtung des Schaumwachstums.
- 2 Stücke von 200 mm x 200 x 35 mm (35 mm Dicke in Parallelrichtung des Schaumwachstums) für die Bestimmung der Wärmeleitfähigkeit in Parallelrichtung des Schaumwachstums.
- 2 Stücke von 200 mm x 200 x 35 mm (35 mm Dicke in senkrechter Richtung des Schaumwachstums) für die Bestimmung der Wärmeleitfähigkeit in senkrechter Richtung des Schaumwachstums.

Zur Herstellung der erfindungsgemäßen Polyurethanhartschaumstoffe gemäß Beispiel 1 sowie dem Vergleichsbeispiele V1 wurden die isocyanatrektiven Verbindungen gemäß Tabelle 1 mit Katalysatoren, Stabilisator, Weichmacher und Treibmittel verrührt, anschließend mit dem Isocyanat vermischt und zum Polyurethanhartschaumstoff verschäumt. Der Isocyanatindex betrug jeweils 125. Die Reaktionsmischung wurde dann in mehreren Lagen auf eine Unterlage aufgesprüht und aushärten lassen, so dass mehrlagige Schaumblöcken von mindestens 800 mm Breite mal 800 mm Länge mal 300 mm Dicke erhalten werden.

Die Zusammensetzung der Reaktionsmischung zur Herstellung der harten Poly-urethanschäume gemäß Beispiel 1 und Vergleichsbeispielen V1 und deren mechanische Eigenschaften sind in der Tabelle 1 angegeben (Angaben in Gewichtsteilen).

**Dabei wurde zur Ermittlung der mechanischen Eigenschaften wie oben beschrieben verfahren Tabelle 1:**

| | Vergleich 1 | Beispiel 1 |
|---|---|---|
| Polyol 1 | 10,29 | 16,00 |
| Polyol 2 | 9,00 | |
| Polyol 3 | 5,40 | |
| Polyol 4 | | 10,00 |
| Polyol 5 | | 5,00 |
| Polyol 6 | 19,30 | 17,24 |
| | | |
| Weichmacher 1 | 20,00 | 6,00 |
| Weichmacher 2 | | 10,00 |
| Vernetzungsmittel 1 | 5,00 | 6,00 |
| Vernetzungsmittel 2 | 5,75 | 6,00 |
| Vernetzungsmittel 3 | 1,50 | 1,50 |
| | | |
| Kat. 1 | 0,06 | 0,06 |
| Kat. 2 | 1,00 | 1,00 |
| Kat. 3 | 1,30 | 1,30 |
| | | |
| Schaumstabilisator 1 | 1,50 | |
| Schaumstabilisator 2 | 0,80 | |
| Schaumstabilisator 3 | | 0,80 |
| Dispergiermittel | 1,75 | 1,75 |
| | | |
| Wasser | 0,05 | 0,05 |
| 1,1,1,3,3-Pentafluorethan | 17,30 | 17,30 |
| | | |
| Summe | 100 | 100 |
| | | |
| Iso 1 | 100,00 | 100,00 |
| | | |
| Index | 125 | 125 |
| Rohdichte nach DIN EN ISO 845 [g/L] | 64 | 65 |
| Druckfestigkeit EN ISO 826 bei Raumtemperatur [N/mm²] | 0,47 | 0,54 |
| Zugefestigkeit nach EN 527-2 bei Raumtemperatur [N/mm²] | 0,53 | 0,49 |
| Zugefestigkeit bei -163 °C [N/mm²] nach EN ISO 826 | 0,56 | 0,74 |
| Gehalt an geschlossenen Zellen [%] | 96 | 95 |
| Thermische Leitfähigkeit bei 10 °C (Ausgangswert [W/(m•K], senkrecht zur Schäumrichtung gemessen | 0,0199 | 0,0200 |
| Thermische Leitfähigkeit bei 10 °C (nach Alterung [W/(m•K], parallel zur Schäumrichtung gemessen | 0,0235 | 0,0228 |
| CTSR-Faktor parallel zur Schäumrichtung | < 0,70 | 1,52 |
| CTSR-Faktor senkrecht zur Schäumrichtung | < 0,70 | 1,56 |

Dabei wurden die folgenden Einsatzstoffe verwendet:

| | |
|---|---|
| Polyol 1: | Ethylendiamin-gestartetes Propylenoxid; OH-Zahl 470 |
| Polyol 2: | Ethylendiamin-gestartetes Propylenoxid; OH-Zahl 750 |
| Polyol 3: | Sorbitol-gestartetes Propylenoxid, OH-Zahl 490 |
| Polyol 4: | Trimethylolpropan-gestartetes Ethylenoxid, OH-Zahl 250 |
| Polyol 5: | Glycerin-gestartetes Polyethylenoxid-co-Propylenoxid (mit Ethylen-Endcap, OH-Zahl 35 |
| Polyol 6: | Polyesterol auf Basis von Phthalsäure, Diethylenglycol und Monoethylenglycol, OF-Zahl 240 |
| Weichmacher 1: | Tris-Chlorpropylphosphat (TCPP) |
| Weichmacher 2: | Triethylphosphat |
| Vernetzungsmittel 1: | Glycerin |
| Vernetzungsmittel 2: | Triethanolamin |
| Vernetzungsmittel 3: | 3,6-Dioxaoctamethylendiamain |
| Kat. 1: | Zinnkatalysator |
| Kat. 2: | tert. Aminkatalysator 1 |
| Kat. 3: | tert. Aminkatalysator 2 |
| Schaumstabilisator 1: | Nonylphenolbasierter Stabilisator |
| Schaumstabilisator 2: | Siliconbasierter Sabilisator 1 |
| Schaumstabilisator 3: | Silikonbasierter Stabilisator 2 |
| Dispergiermittel: | Ölsäure |
| Iso 1: | polymeres MDI |

## Patentansprüche

1. Verfahren zur Herstellung einer kälteflexiblen Polyurethanisolierung bei dem man
a) Polyisocyanate mit
b) Verbindungen mit gegenüber Isocyanaten reaktiven Gruppen,
c) Treibmittel,
d) Katalysatoren,
e) Weichmacher und gegebenenfalls
f) weitere Additive,
zu einer Reaktionsmischung vermischt und auf eine Oberfläche aufträgt und zur Isolierung aushärtet, wobei
Isocyanate (a) und Verbindungen mit gegenüber Isocyanat reaktiven Gruppen (b), Treibmittel, (c), Katalysatoren (d), Weichmacher und gegebenenfalls weitere Additive (e) in solchen Mengen zur Umsetzung gebracht werden, dass der Isocyanatindex im Bereich von 100 - 200 liegt
die Verbindungen mit gegenüber Isocyanaten reaktiven Gruppen (b)
mindestens ein Polyetherol (b1) mit einer nominalen Funktionalität von 4 oder größer, einem Anteil von Propylenoxid, bezogen auf das Gesamtgewicht von Alkylenoxid im Polyetherol (b1) von größer 60 Gew.-% und einer OH-Zahl von mindestens 300 mg KOH/g,
mindestens ein Polyetherol (b2) mit einer nominalen Funktionalität von 3,5 oder kleiner, einem Anteil an prim. OH-Gruppen größer 50 %, und einer OH-Zahl von kleiner als 300 mg KOH/g,
mindestens ein Polyesterol (b3) und
Kettenverlängerer und/oder Vernetzungsmittel (b4) enthalten,
das Polyetherol (b2) mindestens ein Polyetherol (b2a) mit einer nominalen Funktionalität von 3,5 oder kleiner, einem Anteil an Ethylenoxyd, bezogen auf das Gesamtgewicht an Alkylenoxid im Polyol (b2a) von mindestens 80 Gew.-%, einem Anteil an primären OH-Gruppen größer 80 %, und einer OH-Zahl von größer als 100 mg KOH/g bis kleiner als 300 mg KOH/g und mindestens ein Polyetherol (b2b) mit einer nominalen Funktionalität von 3,5 oder kleiner, einem Anteil an primären OH-Gruppen größer 60 %, und einer OH-Zahl von größer als 20 mg KOH/g bis kleiner als 80 mg KOH/g aufweist
und wobei der Wassergehalt, bezogen auf das Gesamtgewicht der Komponenten (b) bis (e), kleiner als 0,5 Gew.-% ist.

2. Verfahren nach Anspruch 1, **dadurch gekennzeichnet, dass** als Startermolekül bei der Herstellung des Polyetherols (b1) Ethylendiamin eingesetzt wird.

3. Verfahren nach Anspruch 1 oder 2, **dadurch gekennzeichnet, dass** das mindestens eine Polyesterol (b3) eine Funktionalität von 2 bis 2,5 und eine Hydroxylzahl von 100 bis 400 mg KOH/g aufweist.

4. Verfahren nach einem der Ansprüche 1 bis 3, **dadurch gekennzeichnet, dass** das mindestens eine Polyesterol (b3) erhalten wird durch Kondensation von Disäure mit Diol, wobei die Disäurekomponente eine aromatische Disäure enthält und die Disäurekomponente Diethylenglycol enthält.

5. Verfahren nach einem der Ansprüche 1 bis 4, **dadurch gekennzeichnet, dass** mindestens eine Verbindung der Kettenverlängerer und oder Vernetzungsmittel (b4) Aminendgruppen aufweist.

6. Verfahren nach einem der Ansprüche 1 bis 5, **dadurch gekennzeichnet, dass** der Anteil der Komponente (b1) 15 bis 35 Gew.-%, der Komponente (b2) 15 bis 35 Gew.-%, der Komponente (b3) 20 bis 35 Gew.-% und der Komponente (b4) 10 bis 35 Gew.-% beträgt, jeweils bezogen auf das Gesamtgewicht der Komponente (b).

7. Verfahren nach einem der Ansprüche 1 bis 6, **dadurch gekennzeichnet, dass** die Komponente (b) neben den Komponenten (b1) bis (b4) weniger als 20 Gew.-% weitere Verbindungen mit gegenüber Isocyanaten reaktiven Gruppen enthält.

8. Verfahren nach einem der Ansprüche 1 bis 7, **dadurch gekennzeichnet, dass** als Polyisocyanat Mischungen aus monomerem Diphenylmethandiisocyanat (MMDI) und höherkernigen Homologen des Diphenylmethandiisocyanats eigesetzt wird

9. Verfahren nach einem der Ansprüche 1 bis 8, **dadurch gekennzeichnet, dass** die Hilfs- und Zusatzstoffe 5 bis 25 Gew.-% Flammschutzmittel enthalten.

10. Verfahren nach einem der Ansprüche 1 bis 9, **dadurch gekennzeichnet, dass** die Flammschutzmittel Triethylphosphat umfassen.

11. Verfahren nach einem der Ansprüche 1 bis 10, **dadurch gekennzeichnet, dass** die Reaktionsmischung durch Aufsprühen auf die Oberfläche aufgebracht wird.

12. Verfahren nach einem der Ansprüche 1 bis 11, **dadurch gekennzeichnet, dass** die Dichte des der Polyurethanisolierung 30 bis 80 g/L beträgt und als Treibmittel physikalische Treibmittel eingesetzt werden.

13. Polyurethanisolierung, erhältlich nach einem Verfahren gemäß einem der Ansprüche 1 bis 12.

14. Polyurethanisolierung nach Anspruch 13, **dadurch gekennzeichnet, dass** der CTSR-Faktor größer als 1,5 ist.

15. Verwendung einer Polyurethanisolierung nach Anspruch 13 oder 14 zur Isolierung von Flüssigerdgastanks an Bord von Schiffen.

## Claims

1. A process for producing cold-flexible polyurethane insulation, in which
a) polyisocyanates are mixed with
b) compounds having groups which are reactive toward isocyanates,
c) blowing agents,
d) catalysts,
e) plasticizers and optionally
f) further additives
to give a reaction mixture and the mixture is applied to a surface and cured to form insulation, wherein
isocyanates (a) and compounds (b) having groups which are reactive toward isocyanate, blowing agents (c), catalysts (d), plasticizers and optionally further additives (e) are reacted in such amounts that the isocyanate index is in the range 100 - 200,
the compounds (b) having groups which are reactive toward isocyanates comprise
at least one polyetherol (b1) having a nominal functionality of 4 or more, a proportion of propylene oxide, based on the total weight of alkylene oxide in the polyetherol (b1) of more than 60% by weight and an OH number of at least 300 mg/KOH/g,
at least one polyetherol (b2) having a nominal functionality of 3.5 or less, a proportion of primary OH groups of more than 50% and an OH number of less than 300 mg KOH/g,
at least one polyesterol (b3) and chain extenders and/or crosslinkers (b4),
the polyetherol (b2) comprises at least one polyetherol (b2a) having a nominal functionality of 3.5 or less, a proportion of ethylene oxide, based on the total weight of alkylene oxide in the polyol (b2a) of at least 80% by weight, a proportion of primary OH groups of more than 80% and an OH number of from more than 100 mg KOH/g to less than 300 mg KOH/g and at least one polyetherol (b2b) having a nominal functionality of 3.5 or less, a proportion of primary OH groups of more than 60% and an OH number of from more than 20 mg KOH/g to less than 80 mg KOH/g,
and wherein the water content, based on the total weight of the components (b) to (e), is less than 0.5% by weight.

2. The process according to claim 1, wherein ethylenediamine is used as starter molecule in the preparation of the polyetherol (b1).

3. The process according to claim 1 or 2, wherein the at least one polyesterol (b3) has a functionality of from 2 to 2.5 and a hydroxy number of from 100 to 400 mg KOH/g.

4. The process according to any of claims 1 to 3, wherein the at least one polyesterol (b3) is obtained by condensation of diacid with diol, where the diacid component comprises an aromatic diacid and the diacid component comprises diethylene glycol.

5. The process according to any of claims 1 to 4, wherein at least one compound of the chain extenders and/or crosslinkers (b4) has amine end groups.

6. The process according to any of claims 1 to 5, wherein the proportion of the component (b1) is from 15 to 35% by weight, that of the component (b2) is from 15 to 35% by weight, that of the component (b3) is from 20 to 35% by weight and that of the component (b4) is from 10 to 35% by weight, in each case based on the total weight of the component (b).

7. The process according to any of claims 1 to 6, wherein the component (b) comprises less than 20% by weight of further compounds having groups which are reactive toward isocyanates in addition to the components (b1) to (b4).

8. The process according to any of claims 1 to 7, wherein mixtures of monomeric diphenylmethane diisocyanate (MMDI) and higher homologs of diphenylmethane diisocyanate having more than two rings are used as polyisocyanate.

9. The process according to any of claims 1 to 8, wherein the auxiliaries and additives comprise from 5 to 25% by weight of flame retardants.

10. The process according to any of claims 1 to 9, wherein the flame retardants comprise triethyl phosphate.

11. The process according to any of claims 1 to 10, wherein the reaction mixture is applied to the surface by spraying.

12. The process according to any of claims 1 to 11, wherein the density of the of the polyurethane insulation is from 30 to 80 g/l and physical blowing agents are used as blowing agents.

13. Polyurethane insulation obtainable by a process according to any of claims 1 to 12.

14. Polyurethane insulation according to claim 13, wherein the CTSR factor is greater than 1.5.

15. The use of polyurethane insulation according to claim 13 or 14 for insulating liquefied natural gas tanks on board ships.

## Revendications

1. Procédé pour la préparation d'une isolation de polyuréthane flexible au froid dans lequel on mélange
a) des polyisocyanates avec
b) des composés comportant des groupes réactifs envers des isocyanates,
c) des propulseurs,
d) des catalyseurs
e) des plastifiants et éventuellement
f) d'autres additifs,
pour donner un mélange réactionnel et on l'applique sur une surface et le durcit pour l'isolation,
les isocyanates (a) et les composés comportant des groupes réactifs envers l'isocyanate (b), les propulseurs (c), les catalyseurs (d), les plastifiants et éventuellement les autres additifs (e) étant mis à réagir en de telles quantités que l'indice d'isocyanate se situe dans la plage de 100 à 200,
les composés comportant des groupes réactifs envers des isocyanates (b) contenant
au moins un polyétherol (b1) doté d'une fonctionnalité nominale de 4 ou plus, d'une proportion d'oxyde de propylène, par rapport au poids total d'oxyde d'alkylène dans le polyétherol (b1) supérieure à 60 % en poids et d'un indice d'OH d'au moins 300 mg de KOH/g,
au moins un polyétherol (b2) doté d'une fonctionnalité nominale de 3,5 ou moins, d'une proportion de groupes OH primaire supérieure à 50 % et d'un indice d'OH inférieur à 300 mg de KOH/g,
au moins un polyesterol (b3) et
des extenseurs de chaînes et/ou des agents de réticulation (b4),
le polyétherol (b2) présentant au moins un polyétherol (b2a) doté d'une fonctionnalité nominale de 3,5 ou moins, d'une proportion d'oxyde d'éthylène, par rapport au poids total d'oxyde d'alkylène dans le polyol (b2a) d'au moins 80 % en poids, d'une proportion de groupes OH primaire supérieure à 80 %, et d'un indice d'OH supérieur à 100 mg de KOH/g et inférieur à 300 mg de KOH/g et au moins un polyétherol (b2b) doté d'une fonctionnalité nominale de 3,5 ou moins, d'une proportion de groupes OH primaire supérieure à 60 %, et d'un indice d'OH supérieur à 20 mg de KOH/g et inférieur à 80 mg de KOH/g
et la teneur en eau, par rapport au poids total des composants (b) à (e), étant inférieure à 0,5 % en poids.

2. Procédé selon la revendication 1, **caractérisé en ce qu'**en tant que molécule de départ lors de la préparation du polyétherol (b1), de l'éthylènediamine est utilisée.

3. Procédé selon la revendication 1 ou 2, **caractérisé en ce que** l'au moins un polyesterol (b3) présente une fonctionnalité de 2 à 2,5 et un indice d'hydroxyle de 100 à 400 mg de KOH/g.

4. Procédé selon l'une quelconque des revendications 1 à 3, **caractérisé en ce que** l'au moins un polyesterol (b3) est obtenu par condensation d'un diacide avec un diol, le composant de diacide contenant un diacide aromatique et le composant de diacide contenant du diéthylèneglycol.

5. Procédé selon l'une quelconque des revendications 1 à 4, **caractérisé en ce qu'**au moins un composé des extenseurs de chaînes et/ou des agents de réticulation (b4) présente des groupes terminaux de type amine.

6. Procédé selon l'une quelconque des revendications 1 à 5, **caractérisé en ce que** la proportion du composant (b1) est de 15 à 35 % en poids, la proportion du composant (b2) est de 15 à 35 % en poids, la proportion du composant (b3) est de 20 à 35 % en poids et la proportion du composant (b4) est de 10 à 35 % en poids, à chaque fois par rapport au poids total du composant (b) .

7. Procédé selon l'une quelconque des revendications 1 à 6, **caractérisé en ce que** le composant (b) contient, outre les composants (b1) à (b4) moins de 20 % en poids d'autres composés comportant des groupes réactifs envers des isocyanates.

8. Procédé selon l'une quelconque des revendications 1 à 7, **caractérisé en ce qu'**en tant que polyisocyanate, des mélanges de diisocyanate de diphénylméthane monomérique (MMDI) et des homologues du diisocyanate de diphénylméthane comportant plus de noyaux sont utilisés.

9. Procédé selon l'une quelconque des revendications 1 à 8, **caractérisé en ce que** les auxiliaires et des additifs contiennent 5 à 25 % en poids d'agents ignifugeants.

10. Procédé selon l'une quelconque des revendications 1 à 9, **caractérisé en ce que** les agents ignifugeants comprennent du phosphate de triéthyle.

11. Procédé selon l'une quelconque des revendications 1 à 10, **caractérisé en ce que** le mélange réactionnel est appliqué par pulvérisation sur la surface.

12. Procédé selon l'une quelconque des revendications 1 à 11, **caractérisé en ce que** la densité de l'isolation de polyuréthane est de 30 à 80 g/L et des propulseurs physiques sont utilisés en tant que propulseurs.

13. Isolation de polyuréthane, qui peut être obtenue par un procédé selon l'une quelconque des revendications 1 à 12.

14. Isolation de polyuréthane selon la revendication 13, **caractérisée en ce que** le facteur CTSR est supérieur à 1,5.

15. Utilisation d'une isolation de polyuréthane selon la revendication 13 ou 14 pour l'isolation de réservoirs de gaz naturel liquide à bord de bateaux.
